# EUROPEAN PATENT APPLICATION

(11) **EP 1 855 485 A2**
(43) Date of publication of application: **14.11.2007**
(21) Application number: 07251913.5
(22) Date of filing: 09.05.2007
(51) Int. Cl.: H04N 7/26

(54) **Adaptive processing of image border**

(30) Priority: 09.05.2006 GB 0609154
(71) Applicant: Tandberg Television ASA, 0607 Oslo (NO)
(72) Inventor: Bock, Alois, Eastleigh SO53 4RH (GB); Bennett, Jeremy Thomas, Eastleigh SO53 4QA (GB)
(74) Representative: Harrison Goddard Foote

(57) **Abstract**

A video compression apparatus for producing a compressed video signal from an input video signal includes quantisation control means 13 for varying a level of quantisation within an image of the video signal proximate to borders of the image.

## Description

This invention relates to adaptive border processing of video images.

Most video productions are such that an area critical for viewing quality is toward a centre of a picture or image. As a result, slightly higher levels of distortion around the edges of the picture are less noticeable than if the same level of distortion had applied across the entire image. Moreover, many consumer display devices do not even display the entire image, i.e. the pixels around the edges of the picture are lost in an 'overscan' region of a display monitor.

In a digital video format, images are usually compressed for transmission and storage. Often sequential images in the video sequence differ only slightly. The difference from a previous, or following, image in the sequence can then be detected and encoded, rather than the entire picture. Such lossy compression techniques are widely used, such as in MPEG encoding.

During compression or encoding, each current picture to be encoded is divided into a grid of macroblocks, each containing 16x16 pixels. A macroblock from a current picture may be compared to a range of 16 by 16 areas (not necessarily aligned with the macroblock grid) from a previously encoded picture in the video sequence. Often the best match is found at a different location. The difference in locations is known as a motion vector, since it indicates the movement of the block between the two pictures. The motion vector can then be used to predict the macroblock for the current picture from the previously encoded picture, thereby reducing the number of bits required in encoding the current picture, since only the motion vector need be transmitted along with an error signal representing the difference between the prediction and the actual macroblock.

In such video compression systems, bit allocation across an image can be precisely controlled and there is a trade-off between picture softening and compression artefacts. Therefore, intelligent bit allocation with a bias towards the centre of the image can improve overall subjective image quality. However, static softening or coarse quantisation towards the edges of the picture can lead to annoying effects on certain scenes such as camera pans where objects move across the image in and out of the border regions.

The problem is exacerbated if static black pixels near the border of the image prevent proper motion compensation at edges of the picture. In those cases quantisation levels near the border of the picture cannot be raised because the coding artefacts around the borders of the picture are already much worse than in the centre.

US 6,463,102 describes a digital video compressor with a border processor for modifying un-displayed edges of an uncompressed image before the image is applied to a compression engine. The un-displayed edges are either turned black, blurred or copied. Alternatively, a video encoder includes a motion estimator with special edge processing that, for example, uses only zero motion vectors for edge macroblocks, and a quantization processor having a special edge processor.

It is an object of the present invention at least to ameliorate the aforesaid difficulties in the prior art.

According to a first aspect of the invention, there is provided a video compression apparatus for producing a compressed video signal from an input video signal, the video compression apparatus comprising quantisation control means for varying a level of quantisation within an image represented by the video signal, wherein the quantisation control means is adapted to vary a level of quantisation for a portion of the image dependent on proximity of the portion of the image to a border of the image.

Conveniently, the video compression apparatus further comprises activity measurement means for determining spatial activity within a portion of the image such that the quantisation control means controls a level of quantisation for the portion of the image dependent on the activity level.

Advantageously, the video compression apparatus comprises motion estimation means for determining a motion vector of a portion of an image such that the quantisation control means controls a level of quantisation dependent on the motion vector.

Conveniently, the video compression apparatus comprises rate buffer means generating a buffer fill level signal such that the quantisation control means controls a level of quantisation dependent on the buffer fill level signal.

Advantageously, the video compression apparatus comprises adaptive pre-filter means for varying at least one of a horizontal cut-off frequency and a vertical cut-off frequency of the video signal dependent upon the buffer fill level signal.

Preferably, the adaptive pre-filter means is adapted to vary at least one of a horizontal cut-off frequency and a vertical cut-off frequency of the video signal for a portion of an image dependent upon proximity of the portion of the image to a border of the image.

Advantageously, the video compression apparatus comprises half-line processing means for replacing a black half line at least at one of a top and a bottom of the image.

Conveniently, the half-line processing means is adapted to replace the black half line with copies of pixels from a neighbouring line within the image.

According to a second aspect of the invention, there is provided a method of compressing an input video signal to provide a compressed video signal, comprising varying a level of quantisation for a portion of an image represented by the video signal, dependent on proximity of the portion of the image to a border of the image.

Advantageously, the method further comprises determining spatial activity within a portion of the image such that varying a level of quantisation for the portion for the image is dependent on the determined spatial activity level.

Conveniently, the method comprises determining a motion vector of a portion of an image such that varying a level of quantisation is dependent on the motion vector.

Advantageously, the method comprises rate buffer means generating a buffer fill level signal such that varying the level of quantisation is dependent on the buffer fill level signal.

Advantageously, the method comprises providing adaptive pre-filter means for varying at least one of a horizontal cut-off frequency and a vertical cut-off frequency of the video signal is dependent upon the buffer fill level signal.

Preferably, varying at least one of a horizontal cut-off frequency and a vertical cut-off frequency of the video signal for a portion of an image is dependent upon proximity of the portion of the image to a border of the image.

Conveniently, the method comprises providing half-line processing means and replacing a black half line at least at one of a top and a bottom of the image.

Preferably, the method comprises replacing the black half line with copies of pixels from a neighbouring line within the image.

According to a third aspect of the invention, there is provided computer program media comprising code means for performing all the steps of the method described above when the program is run on one or more computers.

The invention will now be described, by way of example, with reference to the accompanying drawings in which:
Figure 1 is a magnified image with a black half-line at a bottom edge;
Figure 2 is the magnified image of Figure 1 with the black half-line replaced with active pixels;
Figure 3 is a graph of characteristics of an adaptive pre-filter suitable for use with the invention to avoid encoder overload; and
Figure 4 is a block diagram of an encoding system according to the present invention.

In the Figures, like reference numerals denote like parts.

### Half-line Processing

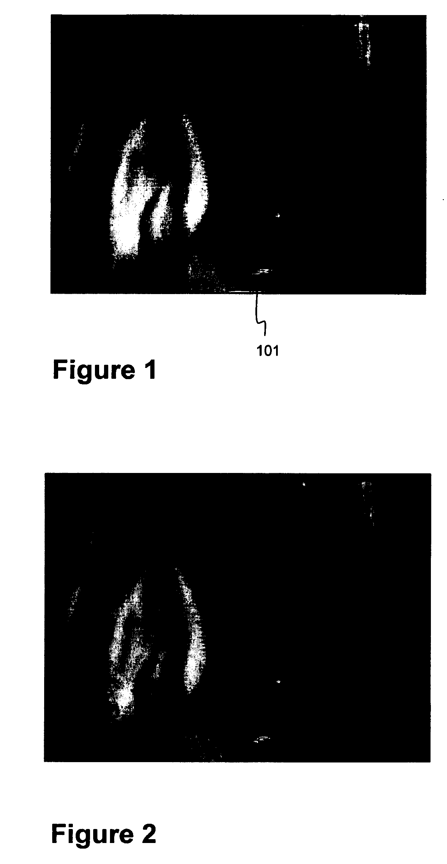

Referring to Figures 1 and 2, known advanced video compression algorithms such as ISO/IEC 14496-10 (AVC) and SMPTE421M (VC1) allow motion compensation and prediction from outside of a coded picture area by replicating a last pixel into a 'blanking' area. However, if a first and last line of the picture are partially black, as is the case in analogue 625-line video signals, then motion predictions from outside the active picture area are no longer valid. Effectively, the black half-lines 'block' any motion compensation from beyond the active picture area. This problem can be overcome by replacing the black pixels with active pixels from a neighbouring line. Figure 1 shows an extract of an example image with a black half-line 101 and Figure 2 shows the blanking half-line replaced with active video pixels.

Once these black half-lines are removed, coarser quantisation can be applied at a top and bottom of the picture to achieve optimum visual performance.

### Adaptive Pre-filter

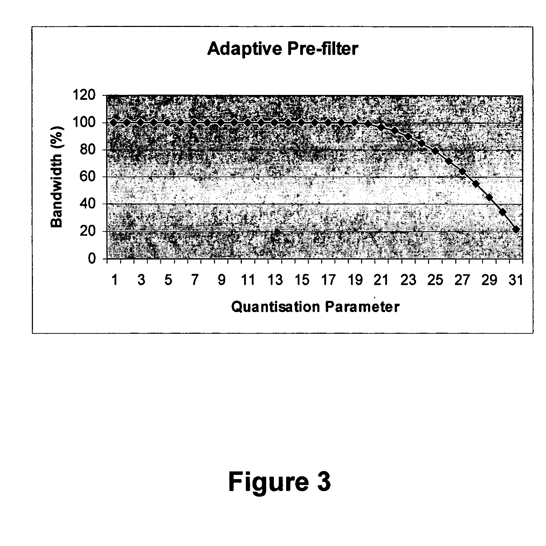

Referring to Figure 3, adaptive filtering before encoding, i.e. pre-filtering, helps to reduce coding artefacts for highly critical material. A video signal is low-pass filtered adaptively dependent on picture criticality. The pre-filter reduces a level of high, spatial, frequencies by passing the video signal through a horizontal and/or a vertical low-pass filter. In normal operation, over a wide range of quantisation levels, the bandwidth of the pre-filter is set to its nominal value, denoted here as 100%. However, as a rate buffer fills up and a quantisation parameter has to be increased to maintain a desired output bit rate, the pre-filter reduces picture detail by gradually reducing its bandwidth. Figure 3 shows the operation of the adaptive pre-filter for the case of MPEG-2 where the quantisation parameter ranges from I to 31.

In the application described above, the pre-filter is used to avoid severe coding artefacts for highly critical material. In other words, the pre-filter is used to avoid encoder overload. In addition to this process, the adaptive pre-filter can also be used to soften a picture towards its edges, by reducing a cut-off frequency of a horizontal filter at a top and bottom border of the picture and/or by reducing the cut-off frequency of the vertical filter at the left and right border of the picture. This helps to reduce bit allocation required for border areas.

### Adaptive border processing

A second stage of adaptive border processing is applied in an encoding loop itself by using higher levels of quantisation towards the edges of the picture. How much border processing can be used for optimal visual performance depends on the following factors:
- picture detail;
- type of motion, i.e. pan, zoom, rotation, etc; and
- speed of motion.

Therefore, each picture edge is individually controlled depending on these factors. For example, if motion at a picture edge is predominately towards the picture edge, then a higher level of quantisation can be applied than with motion towards the centre of the picture. This is because the edge macroblocks can be predicted from inside the picture area resulting in good predictions. Motion towards the centre of the picture, however, cannot be predicted as well and should be quantised less coarsely. Translational motion along a picture edge lies between these two cases.

An effect of picture detail on distortion is also taken into account. Areas with high spatial activity tend to mask distortion to some extent and can, therefore, be quantised more coarsely. Finally, a fill level of a rate buffer has to be taken into account so as to avoid rate buffer overflow and underflow. From these factors the quantisation parameter is calculated and quantisation levels may optionally be gradually increased towards the border of the picture.

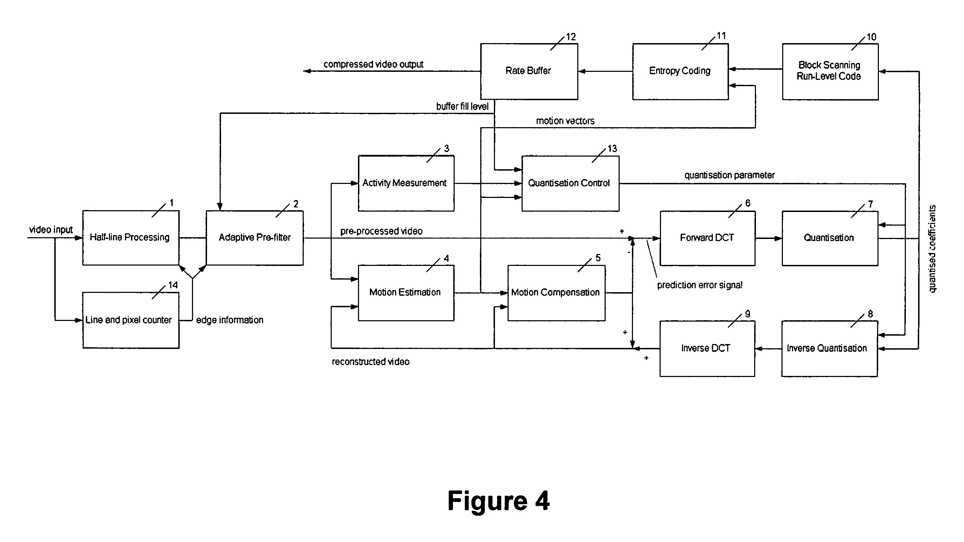

Figure 4 shows a block diagram of an encoding system according to the invention.

A half-line processing module 1 has an input for a video signal and an output to an adaptive pre-filter 2. A line and pixel counter 14, in parallel with the half-line processing module, also has an input for the video signal and outputs to the half-line processing module 1 and the adaptive pre-filter 2. A pre-processed video signal output of the adaptive pre-filter 2 is input in parallel to an activity measurement module 3 and a motion estimation module 4. An output of the activity measurement module 3 is input to a quantisation control module 13 and motion vectors output from the motion estimation module 4 are input to a motion compensation block 5 and to the quantisation control module 13. An output of the motion compensation module is combined with the pre-processed video signal to input a prediction error signal to a forward discrete cosine transform (DCT) module 6. An output of the forward discrete cosine transform module 6 is input to a quantisation module 7 together with a quantisation parameter input from the quantisation control module 13.

Quantisation coefficients output by the quantisation module 7 are fed back with the quantisation parameter from the quantisation control module 13 to an inverse quantisation module 8. An output of the inverse quantisation module 8 is input to an inverse discrete cosine transform module 9. An output of the inverse discrete cosine transform (DCT) module 9 is combined with an output of the motion compensation module 5 to form a reconstructed video signal which is fed back to the motion compensation module 5 and the motion estimation module 4.

The quantisation coefficients output by the quantisation module 7 are also input to a block scanning and run-level code module 10. An output from the block scanning and run-level code module 10 are input, together with motion vectors output from the motion estimation module 4, to an entropy coding module 11. An output of the entropy coding module 11 is input to a rate buffer 12. A compressed video signal is output from the rate buffer 12 and a buffer fill level signal is fed from the rate buffer 12 to the adaptive pre-filter module 2 and the quantisation control module 13.

In use, a video signal is input to the half-line processing module 1 which removes black half lines at a top and/or bottom of a picture by replacing black edge pixels with copies of pixels from a neighbouring line within the active picture. The video signal is also input in parallel to the line and pixel counter 14. This block provides edge information to the half-line processing block 1 and the adaptive pre-filter 2. The video signal is then passed on to the adaptive pre-filter 2 which varies the signal's horizontal and/or vertical cut-off frequency, depending on the buffer fill level signal input from the rate buffer 12 and on spatial position, i.e. closeness to a border. Thus the pre-processed video signal is fed to the activity measurement module 3 and the motion estimation module 4. After subtracting a predicted signal derived in the motion compensation block 5, the resulting prediction error signal is passed to the forward DCT 6. After forward DCT the coefficients are quantised, inverse quantised and transformed back into the spatial domain by the quantisation block 7, the inverse quantisation block 8 and the inverse DCT block 9 respectively. The quantised coefficients are block scanned and run-level coded in block scanning and run-level code module 10 and then entropy coded in entropy coding module 11. The rate buffer 12 is used to smooth the output bit rate to a constant value or a variable bit rate depending on encoder setup. The quantisation control module 13 therefore takes one or more of spatial activity, motion vectors, buffer fill level and spatial position, i.e. closeness to a border, into account in calculating the quantisation parameter for each macroblock.

Thus this invention provides a method and apparatus for controlling pre-filters and quantisation levels for portions of images near picture borders in such a way that excessive coding artefacts are avoided. In particular, a combination of pre-processing and adaptive border quantisation achieves a higher picture quality using a different bit allocation at borders of an image from that used at a centre of the image.

## Claims

1. A video compression apparatus for producing a compressed video signal from an input video signal, the video compression apparatus comprising quantisation control means (13) for varying a level of quantisation within an image represented by the video signal, wherein the quantisation control means is adapted to vary a level of quantisation for a portion of the image dependent on proximity of the portion of the image to a border of the image.

2. A video compression apparatus as claimed in claim 1, further comprising activity measurement means (3) for determining spatial activity within a portion of the image such that the quantisation control means controls a level of quantisation for the portion of the image dependent on the activity level.

3. A video compression apparatus as claimed in claims 1 or 2, comprising motion estimation means (4) for determining a motion vector of a portion of an image such that the quantisation control means controls a level of quantisation dependent on the motion vector.

4. A video compression apparatus as claimed in any of the preceding claims, comprising rate buffer means (12) for generating a buffer fill level signal such that the quantisation control means controls a level of quantisation dependent on the buffer fill level signal.

5. A video compression apparatus as claimed in claim 4, comprising adaptive pre-filter means (2) for varying at least one of a horizontal cut-off frequency and a vertical cut-off frequency of the video signal dependent upon the buffer fill level signal.

6. A video compression apparatus as claimed in claim 5, wherein the adaptive pre-filter means (2) is adapted to vary at least one of a horizontal cut-off frequency and a vertical cut-off frequency of the video signal for a portion of the image dependent upon proximity of the portion of the image to a border of the image.

7. A video compression apparatus as claimed in any of the preceding claims, comprising half-line processing means (1) for replacing a black half line (101) at least at one of a top and a bottom of the image.

8. A video compression apparatus as claimed in claim 6, wherein the half-line processing means (1) is adapted to replace the black half line (101) with copies of pixels from a neighbouring line within the image.

9. A method of compressing an input video signal to provide a compressed video signal, comprising varying a level of quantisation for a portion of an image represented by the video signal, dependent on proximity of the portion of the image to a border of the image.

10. A method as claimed in claim 9, further comprising determining spatial activity within a portion of the image such that varying a level of quantisation for the portion for the image is dependent on the determined spatial activity level.

11. A method as claimed in claims 9 or 10, comprising determining a motion vector of a portion of an image such that varying a level of quantisation is dependent on the motion vector.

12. A method as claimed in any of claims 9 to 11, comprising rate buffer means (12) generating a buffer fill level signal such that varying the level of quantisation is dependent on the buffer fill level signal.

13. A method as claimed in claim 12, comprising providing adaptive pre-filter means (2) for varying at least one of a horizontal cut-off frequency and a vertical cut-off frequency of the video signal dependent upon the buffer fill level signal.

14. A method as claimed in claim 13, comprising varying at least one of a horizontal cut-off frequency and a vertical cut-off frequency of the video signal for a portion of an image dependent upon proximity of the portion of the image to a border of the image.

15. A method as claimed in any of claims 9 to 14, comprising providing half-line processing means (1) and replacing a black half line (101) at least at one of a top and a bottom of the image.

16. A method as claimed in claim 15, comprising replacing the black half line (101) with copies of pixels from a neighbouring line within the image.

17. A computer program media comprising code means for performing all the steps of the method of any of claims 9 to 16 when the program is run on one or more computers.
